(19) Europäisches Patentamt / European Patent Office / Office européen des brevets

(11) **EP 2 088 556 B1**

(12) **EUROPEAN PATENT SPECIFICATION**

(45) Date of publication and mention
of the grant of the patent:
**01.02.2017 Bulletin 2017/05**

(51) Int Cl.:
***G06T 7/00*** *(2017.01)*

(21) Application number: **08002128.0**

(22) Date of filing: **05.02.2008**

(54) **Method and system for registration to align at least one preoperative image to at least one intraoperativley acquired image**

Verfahren und System zur Registrierung zwecks Ausrichtung mindestens eines präoperativen Bildes an mindestens einem während einer Operation aufgenommenen Bild

Procédé et système pour mettre en correspondance au moins une image préopératoire avec au moins une image acquise pendant l'opération

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.08.2009 Bulletin 2009/33**

(73) Proprietor: **Siemens Healthcare GmbH
91052 Erlangen (DE)**

(72) Inventors:
• **Demirci, Stefanie
80634 München (DE)**
• **Kutter, Oliver
80796 München (DE)**
• **Navab, Nassir
81247 München (DE)**

(56) References cited:
**DE-A1- 10 322 738     US-A1- 2006 002 615**

• **MOURGUES F ET AL: "3D reconstruction of the operating field for image overlay in 3D-endoscopic surgery" PROCEEDINGS IEEE AND ACM INTERNATIONAL SYMPOSIUM ON AUGMENTED REALITY IEEE COMPUT. SOC LOS ALAMITOS, CA, USA, 2001, pages 191-192, XP010568070 ISBN: 0-7695-1375-1**

EP 2 088 556 B1

**Description**

The present invention relates to a method and a system for registration of at least one preoperative image with at least one intraoperatively acquired image.

In the current clinical workflow of minimally invasive aortic procedures navigation tasks are performed under 2D or 3D angiographic imaging. Many solutions for navigation enhancement suggest an integration of the preoperatively acquired computed tomography angiography (CTA) in order to provide the physician with more image information and reduce contrast injection and radiation exposure. This requires exact registration algorithms that align the CTA volume to the intraoperative 2D or 3D images.

BACKGROUND OF INVENTION

During minimally invasive endovascular aortic procedures, after the insertion of a surgical instrument, e.g. a pigtail catheter and guide wires, in particular a stent graft is placed inside the aorta. The entire interventional catheter navigation is done under 2D angiography imaging where the physician is missing the important 3D information. With the implementation of systems providing three-dimensional angiography reconstructions during interventions, the image information available for the interventionalist has been improved. However, such image acquisitions cause very high radiation exposure and the produced images are of low quality and small size (30x40cm). Thus, there is a need for methods enhancing the amount and quality of image information given to the interventionalists. As the diagnosis and the planning of the procedure is done by means of a CTA (Computed tomography angiography), by integrating this volume into the intervention room, one can provide physicians with high quality 3D information during intervention.

According to [1] a fiducial-based 2D-3D registration algorithm for the alignment of X-Ray and CT images is developed. Although fiducial markers are still necessary to evaluate registration results, they are highly disadvantageous for practical use.

Existing methods for 2D-3D and 3D-3D registration of interventional X-Ray and CT images, e.g. [7], [8] or [9], give efficient and accurate results provided that dissimilarities in the images are limited.

Interventional fluoroscopy images however also display medical instruments such as catheters and stent shafts that cover large parts of the image information due to high focus settings of the X-Ray machine. These interventional instruments are not present within the CTA data and can thereby cause registration algorithms to obtain wrong results. Further dissimilarities can be produced by varying presence of contrasted blood vessels. As the CTA image is by specification contrasted, existing registration algorithms are not able to match an uncontrasted intraoperative fluoroscopy image to it.

The paper of MOURGUES F ET AL: "3D reconstruction of the operating field for image overlay in 3D-endoscopic surgery" PROCEEDINGS IEEE AND ACM INTERNATIONAL SYMPOSIUM ON AUGMENTED REALITY IEEE COMPUT. SOC LOS ALAMITOS, CA, USA, 2001, pages 191-192, XP010568070 ISBN: 0-7695-1375-1 teaches a method for registration of at least one preoperative image with at least one intraoperatively acquired image according to the precharacterizing portion of claim 1.

US 2006/002615 A1 teaches an image enhancement method and a system for fiducial-less tracking of treatment targets. According to the method disclosed therein, 2D DRRs are generated from pre-operative 3D scan data and are registered to 2D intra-operative X-ray projection in images.

SUMMARY OF INVENTION

It is the main objective of this paper to provide efficient, robust registration methods for aligning the preoperative volume to the intraoperatively acquired images. Additional to robustness and real-time constraint the method should be independent of severe dissimilarities in the images.

This object is achieved by the features mentioned in the independent claims. Preferred embodiments of the invention are described in the dependent claims.

According to the invention, an efficient method for image-based 2D-3D and 3D-3D registration is provided that reduces the dissimilarities by image preprocessing, e.g. implicit detection and segmentation, and adaptive weights introduced into the registration procedure.

The inventive method for preferably image-based registration of at least one preoperative image with at least one intraoperatively acquired image comprises the steps of:

a) receiving preoperative three-dimensional (3D) image data indicative of a region of interest,

b) receiving intraoperative image data indicative of the region of interest and the presence of at least one part of image dissimilarities between the preoperative image data and the intraoperative image data, the image dissimilarities being caused by the presence of contrast in the preoperative image data and the presence of surgical instruments in the intraoperative image data,

c) segmenting the intraoperative image data by a threshold filter,

d) applying an image interpolation scheme to the segmented voxels of the intraoperative image data in order to remove the surgical instruments from the at least one intraoperatively acquired image,

e) performing registration for aligning the received preoperative 3D image data to the intraoperative image data adapted in step d), wherein the registration algorithm iteratively optimizes the pose of a virtual X-Ray source by repeatedly generating a DRR (Digitally Reconstructed Radiograph) image from the preoperative image data, wherein the contrast inside the region of interest is removed during the DRR generation.

In particular said image dissimilarities are caused by varying visible presence of surgical instruments and/or contrast agent.

Said intraoperatively acquired image can be represented by intraoperative three-dimensional or by two-dimensional (2D) image data.

It is possible that the afore mentioned step d) and e) can be simultaneously performed.

Further aspects of the invention are a system comprising software modules for performing the afore mentioned inventive method and a computer storage device comprising machine readable and executable program instructions which comprise steps of performing the afore mentioned inventive method. The main advantage of the presented method is its robustness in terms of image dissimilarities which is achieved by image processing and appropriate registration algorithms.

The presented image-based solution, which in combination with the initial C-arm position information currently available within interventional angiography suites makes no use of fiducials.

BRIEF DESCRIPTION OF THE DRAWINGS

Preferred embodiments of the present invention will now be described with reference to the accompanying drawing in which:

Figure 1(a) shows a DRR image of an abdominal aortic aneurysm, Figure 1(b) is generated with the same settings and enabled removal of the contrasted aorta.
The medical instrument displayed inside the intraoperative 3D volume in Figure 1(c) has been removed in Figure 1(d).

Figure 2 generally depicts a schematic diagram for a 3D-3D registration solution.

Figure 3 schematically shows a Digitally Reconstruction Radiograph (DDR) process and

Figure 4 generally depicts a diagram for a 2D-3D registration solution,

Figure 5 schematically shows an apparatus according to the invention.

DETAILED DESCRIPTION OF THE INVENTION AND DRAWINGS

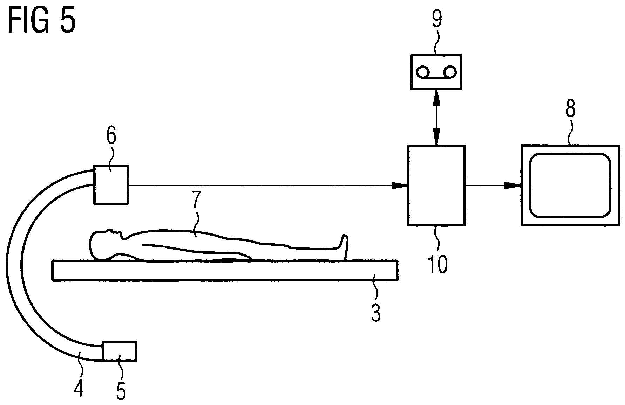

Figure 5 schematically shows an apparatus according to the invention which comprises a system for performing the following described inventive method.

With reference to figure 5 an apparatus, preferably a X-Ray apparatus, is shown. A surgical instrument (not shown in the figure) can be navigated through a vascular structure of a body volume (region of interest) of a patient 7. The system comprises a table 3 for supporting the patient and in the shown preferred embodiment it comprises a C-arm 4 with a X-ray source 5 and an image intensifier 6 for acquiring a series of images. The image intensifier is connected with a processing system 10, preferably a computer, which can connect to a storage device 9 and a display unit 8. Software modules for performing the inventive method can be implemented in the processing system. The storage device can comprise an executable program of instructions to perform program steps for the inventive methods described in the following.

Methods:

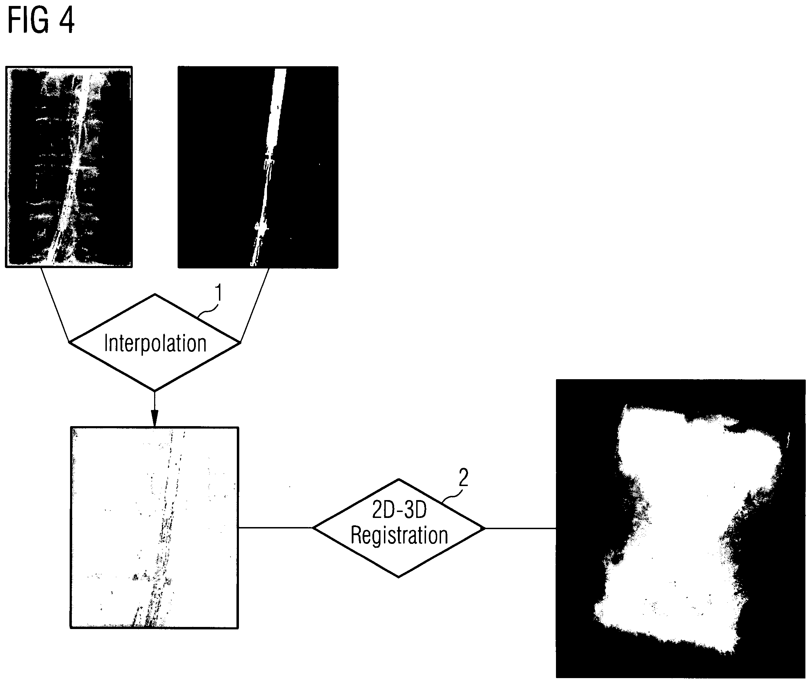

2D-3D Registration (see figure 4):

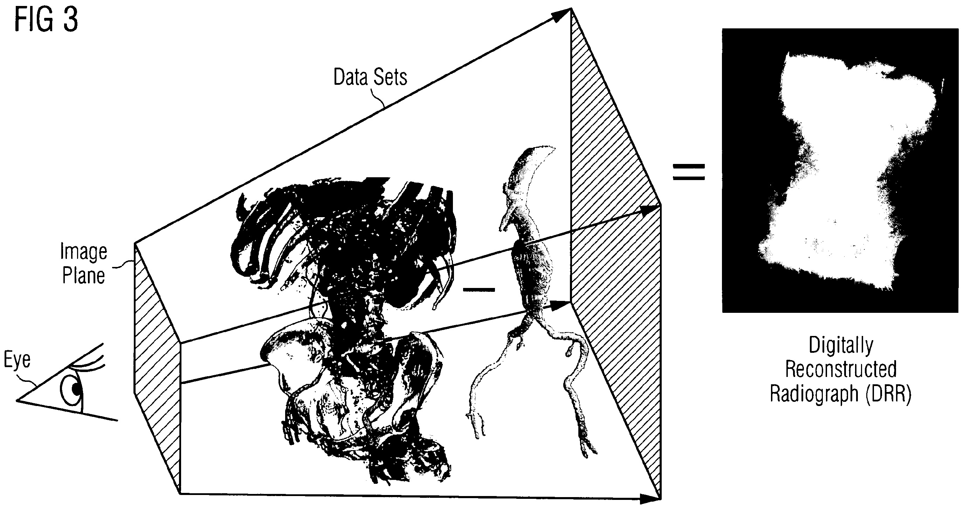

2D-3D intensity-based registration of the preoperative CTA images and intraporative X-Ray Images is employed. The algorithm iteratively optimizes the pose of a virtual X-Ray source by repeatedly generating DRR (Digitally Reconstructed Radiograph, see e.g. figure 3) images from the preoperative CTA while minimizing the image dissimilarity of the DRR and intraoperative X-Ray image (see result in the bottom right-handed picture of figure 4).

DRR Generation:

For the DRR generation GPU (Graphics Processing Unit) accelerated raycasting is used, implemented in GLSL (OpenGL Shading Language) similar to the work of Krüger et al. [2] The presented DRR renderer uses their scheme to determine the ray entry and exit points into the volume, however a single render pass to compute the X-Ray attenuation along each ray is employed. For the conversion of CT houndsfield units to X-Ray attenuation values a linear 1D transfer function is used implemented via dependent texture reads directly on the GPU [3].

Addressing Image Dissimilarities:

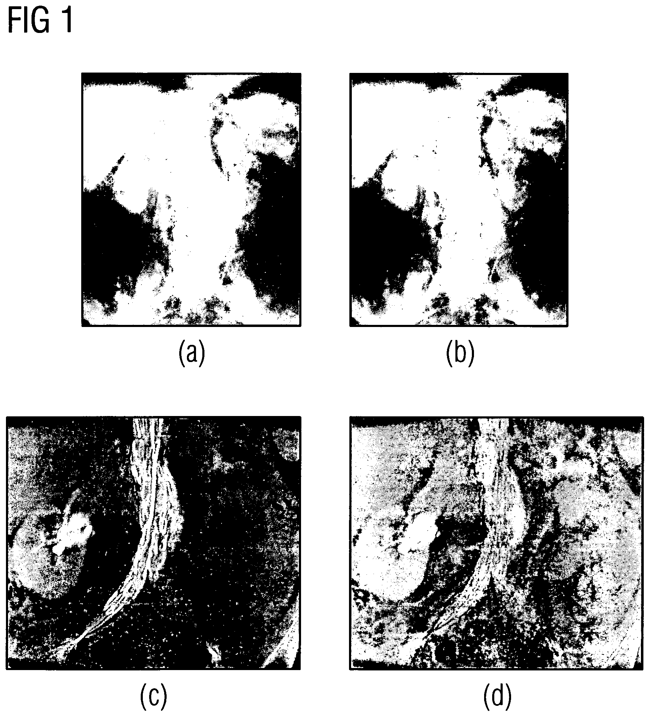

A problem for image-based registration for aortic interventions is the presence of contrast in the preoperative CTA dataset and the presence of surgical instruments in the intraoperative X-Ray images.
DRR images generated from the CTA dataset contain a contrasted aorta, however intraoperative X-Ray images are not necessarily contrasted. This poses a problem for the image-based registrations as similarity metrics can hardly deal with such large dissimilarities. To address this problem a method to remove the contrast inside the aorta ( see top left-handed picture of figure 4) during DRR generation is implemented (see step 1 in figure 4). The idea is to do a lookup in a second volume, containing only the segmented aortic tree, before updating the attenuation along the ray. If the lookup yields a value greater than zero we scale the value interpolated from the original preoperative CTA dataset with a user set value.
The intraoperative X-Ray images contain all medical instruments that are inside the detector's field of view at acquisition time. In case of endovascular aortic interventions the image dissimilarities induced by these obstacle cover large parts of the image and therefore, affect existing registration algorithms. Therefore, the instrument is segmented (see top right-handed picture of figure 4) by a connected threshold filter (ITK = Insight Toolkit, Kitware [4]) and then, during registration, a modified optimization scheme is applied that only considers the background pixels for the similarity comparison (see bottom left-handed picture of figure 4). Thereby, the registration process (see step 2 in figure 4) only takes the anatomic data into account.
Regarding figure 1, for example, figure 1(a) shows a DRR image of an abdominal aortic aneurysm, 1(b) is generated with the same settings and enabled removal of the contrasted aorta.
The medical instrument displayed inside the intraoperative 3D volume in 1(c) has been removed in 1(d).

Pose Optimization:

The above described methods are embedded into a framework for optimizing the pose of the virtual X-Ray source by various image similarity metrics and optimization algorithms. One of the most robust optimization algorithms is Nearest Neighbour and Powell-Brents Direction search method. Similarly, one of the most accurate similarity metric is normalized cross correlation [5]. The optimal pose calculation was further optimized by a good initial data/values that can be automatically extracted out of any mounted interventional angiography system.

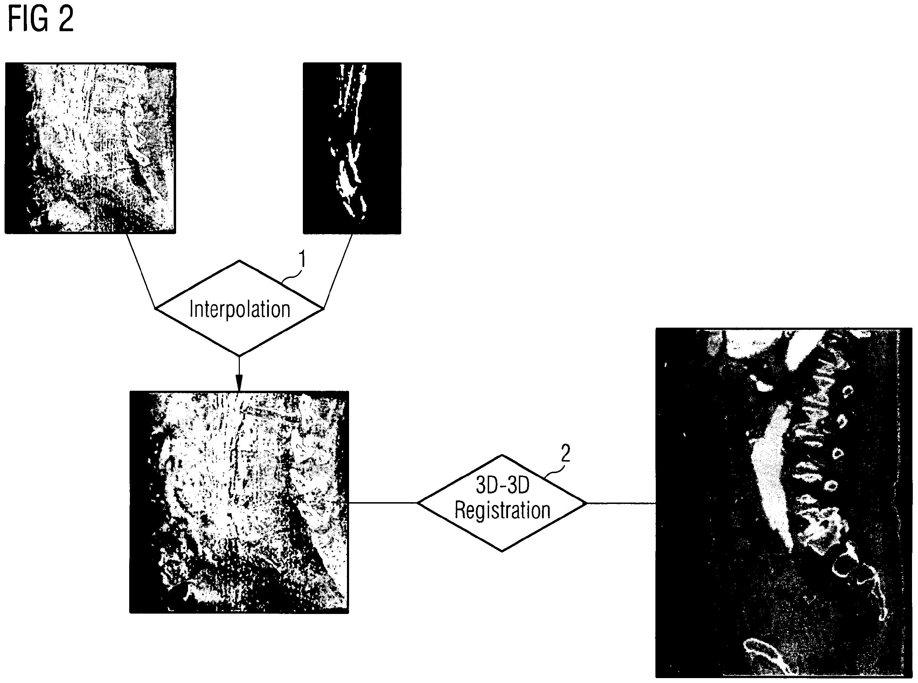

3D-3D Registration (see figure 2):

Due to the more and more common application of interventional 3D imaging, robust 3D-3D registration of these images to the preoperative CTA is of high interest. The medical instruments that are displayed inside the interventional 3D images (see top left-handed picture of figure 2) prove to be disadvantageous for existing registration algorithms, as the image dissimilarities
are too severe for general similarity measures. In the following the presented solution can handle dissimilarities in 3D images for registration purposes.

Instrument Removal:

First, the instruments are segmented in the interventional image by a connected threshold image filter provided by ITK (see top right-handed picture of figure 2). Let I be the image volume of width w, height h and slices d consisting of voxels (x, y, z) and let S denote the set of segmented voxels. Each segmented voxel $V = (x_v, y_v, z_v)$ is then interpolated in all directions x, y and z by setting the surrounding background voxels to knot points of B-Splines [6] $C_x$, $C_y$, $C_z$:

$$C_x(V) = \sum_{i=0,(i,y_v,z_v)\notin S}^{w} I(i, y_v, z_v)N_{i,3,\tau}(V)$$

where

$$\tau = (\tau_1, \ldots, \tau_w)$$

is the vector of knot points and $N_{i,3,\tau}$ are the basis functions that build up a certain B-Spline of degree 3. $C_y$ and $C_z$ accordingly calculate the B-Spline interpolation in direction y and z. The interpolated voxel value of V is then calculated by

$$\frac{1}{3} (C_x(V) + C_y(V) + C_z(V))$$

By applying the interpolation scheme (see step 1 in figure 2) to all segmented voxels all visible instruments are removed from the interventional volume (see bottom left-handed picture of figure 2) and the following 3D-3D registration procedure (see step 2 in figure 2) can be applied to align it to the CTA volume (see result in the bottom right-handed picture of figure 2).

Registration:

For the registration process, normalized gradient correlation [5] is used as the most accurate similarity measure. The optimization of the cost function is done by a best neighbour approach (also hill climbing) which is preferred to the Powell-Brent method because it is proved to be more independent of initial pose settings and therefore more robust.

RESULTS

The experiments is performed on an Intel Core 2 PC containing 2.66 GHz CPU and 4096 MB of main memory. For the DRR computation GeForce 8800 GTX (NVIDIA Corp.) GPU with 768 MB dedicated GDDR3 is used memory. The evaluations of the proposed registration algorithms requires a selection of 2D and 3D datasets with varying presence of contrast agent and medical instruments. Each of them is then registered to the preoperative CTA volume by applying the appropriate registration algorithm. CTA images are acquired by either Siemens Somatom Sensation 64 or Siemens Somatom Definition, interventional 2D and 3D X-Ray images are taken by Siemens AXIOM Artis dTA angiography suite with dynaCT software.

The accuracy of the proposed algorithms is evaluated by RSME (Random mean squared error) to a ground truth transformation that had been extracted visually by an expert. Table 2 presents the error estimation and computation performance of the proposed 3D-3D registration method for four datasets. For the performance evaluation of the DRR computation shown in Table 1, the influence of the additional code path for removing the contrasted aorta is evaluated for varying DRR image resolution and fixed maximum number of samples along a ray.

Furthermore, it is possible to integrate electro-magnetic tracking of the stent mounting system with the presented methods in the medical workflow enabling a correct and robust guidance of catheters and guide wires intraoperatively. This can bring about futher contrast reduction and less radiation exposure during endovascular interventions.

Table 1. Performance evaluation of DRR renderer for three volume datasets with different sizes.

| DRR Resolution | Volume resolution | Max Samples | Contrast Removal | Avg. Time [ms] |
|---|---|---|---|---|
| 256 x 256 | 256 x 256 x 348 | 256 | No | 5.26 |
| 512 x 512 | 256x256x348 | 256 | No | 11.76 |
| 1024 x 1024 | 256 x 256 x 348 | 256 | No | 24.39 |
| 256 x 256 | 256 x 256 x 348 | 256 | Yes | 7.69 |
| 512 x 512 | 256x256x348 | 256 | Yes | 14.29 |
| 1024 x 1024 | 256 x 256 x 348 | 256 | Yes | 38.46 |
| 256 x 256 | 256 x 256 x 398 | 256 | No | 5.56 |
| 512x512 | 256 x 256 x 398 | 256 | No | 12.5 |
| 1024 x 1024 | 256 x 256 x 398 | 256 | No | 25.64 |
| 256 x 256 | 256 x 256 x 398 | 256 | Yes | 9.09 |
| 512x512 | 256x256x398 | 256 | Yes | 15.38 |
| 1024 x 1024 | 256 x 256 x 398 | 256 | Yes | 41.67 |
| 256 x 256 | 512x512x512 | 512 | No | 8.33 |
| 512x512 | 512x512x512 | 512 | No | 16.67 |
| 1024 x 1024 | 512x512x512 | 512 | No | 43.47 |

Table 2. Accuracy evaluation of 3D-3D registration.

| Dataset | Volume Resolution | | Translation | | | Rotation | | | RMSE |
|---|---|---|---|---|---|---|---|---|---|
| | CTA | 3D X-Ray | $T_x$(mm) | $T_y$(mm) | $T_z$(mm) | $\theta_x$(deg) | $\theta_y$(deg) | $\theta_z$(deg) | |
| Data A | 512x512x280 | 256x256x219 | -23.7 | -12.0 | -73.8 | 0.04 | 0.05 | 0.05 | 1.96 |
| | | | -22.2 | -10.0 | -76.1 | 0.05 | 0.04 | 0.05 | |
| Data B | 512x512x398 | 256x256x219 | -16.0 | -8.0 | 22.9 | 0.03 | -0.03 | 0.04 | 2.91 |
| | | | -13.9 | -7.7 | 23.1 | 0.03 | -0.02 | 0.03 | |
| Data C | 512x512x651 | 256x256x219 | -3.8 | -3.3 | 25.0 | 0.0 | 0.0 | 0.1 | 1.93 |
| | | | -3.4 | -3.4 | 23.6 | 0.0 | 0.0 | 0.1 | |
| Data D | 512x512x398 | 256x256x219 | -16.6 | -28.7 | -11.8 | -0.0 | 0.0 | 0.05 | 0.38 |
| | | | -16.6 | -28.7 | -12.3 | 0.0 | 0.0 | 0.05 | |

References

[1] O. Kutter, S. Kettner, E. U. Braun, N. Navab, R. Lange, and R. Bauernschmitt, "Towards an integrated planning and navigation system for aortic stent-graft placement," in Proc. of Computer Assisted Radiology and Surgery (CARS), June 2007.

[2] J. Kr"uger and R. Westermann, "Acceleration Techniques for GPU-based Volume Rendering," in Proceedings IEEE Visualization 2003, 2003.

[3] A. Khamene, P. Bloch, W. Wein, M. Svatos, and F. Sauer, "Automatic registration of portal images and volumetric CT for patient positioning in radiation therapy," Medical Image Analysis , pp. 96-112, Feb. 2006.

[4] L. Ibanez, W. Schroeder, L. Ng, and J. Cates, "The itk software guide," 2005.

[5] G. P. Penney, J. Weese, J. A. Little, P. Desmedt, D. L. G. Hill, and D. J. Hawkes, "A comparison of similarity measures for use in 2-d3-d medical image registration," IEEE Trans. on Medical Imaging (TMI) 17(4), pp. 586 - 595, 1998.

[6] P. Dierckx, Curve and Surface Fitting with Splines, Oxford University Press, 1995.

[7] US 2006/188139 A1: Tree structur based 2D to 3D registration

[8] DE 10122875 C1: Kombiniertes 3D-Angio-Volumenrekonstruktionsverfahren (corresponding with US 2002/0191735 A1: Combined Volume Reconstruction Method)

[9] US 2006/235287 A1: Apparatus and method for navigation an instrument through an anatomical structure

**Claims**

1. A method for registration of at least one preoperative image with at least one intraoperatively acquired image comprising the steps of:

   a) receiving preoperative three-dimensional (3D) image data indicative of a region of interest,

   b) receiving intraoperative image data indicative of the region of interest and the presence of at least one part of image dissimilarities between the preoperative image data and the intraoperative image data, the image dissimilarities being caused by the presence of contrast in the preoperative image data and the presence of surgical instruments in the intraoperative image data,

   c) segmenting the intraoperative image data by a threshold filter,

   d) applying an image interpolation scheme (1) to the segmented voxels of the intraoperative image data in order to remove the surgical instruments from the at least one intraoperatively acquired image,

   e) performing registration (2) for aligning the received preoperative 3D image data to the intraoperative image data adapted in step d), wherein the registration algorithm iteratively optimizes the pose of a virtual X-Ray source by repeatedly generating a DRR (Digitally Reconstructed Radiograph) image from the preoperative image data, wherein the contrast inside the region of interest is removed during the DRR generation.

2. A method as claimed in claim 1, wherein the contrast inside the region of interest is removed by

   - segmenting the contrasted part of the preoperative image data and storing the segmented part in a second volume,

   - during the DRR generation, doing a look-up in the second volume before updating an attenuation along the ray, and if the lookup yields a value greater than zero, scaling the value interpolated from the originally received preoperative image data with a user set value.

3. A method as claimed in any of the preceding claims, wherein step d) and e) of claim 1 can be simultaneously performed.

4. A method as claimed in any of the preceding claims, wherein said intraoperatively acquired image is represented by intraoperative three-dimensional image data.

5. A method as claimed in any of the preceding claims 1, 2 or 4, wherein said intraoperatively acquired image is represented by intraoperative two-dimensional (2D) image data.

6. A method as claimed in claim 1, wherein in the case that the preoperative image data contain at least a contrasted part in the region of interest, the contrast inside the region of interest is removed by segmenting the contrasted part and by interpolating the remaining part of the image data from the originally received preoperative image data.

7. A method as claimed in any of the preceding claims, wherein said scheme in step d) of claim 1 comprises the step of introducing information of the segmented image data as adaptive weights either into said DRR generation or into the evaluation of suitable similarity measures during said registration procedure.

8. A system (10) for registration of at least one preoperative image with at least one intraoperatively acquired image comprising:

   - a processor,

   - a receiver software module for receiving preoperative three-dimensional (3D) image data indicative of a region of interest,

- a receiver software module for receiving intraoperative image data indicative of the region of interest and the presence of at least one part of image dissimilarities between the preoperative image data and the intraoperative image data, the image dissimilarities being caused by the presence of contrast in the preoperative image data and the presence of surgical instruments in the intraoperative image data,

- a segmentation software module for segmenting the intraoperative image data by a threshold filter,

- an application software module for applying an image interpolation scheme (1) to the segmented voxels of the intraoperative image data in order to remove the surgical instruments from the at least one intraoperatively acquired image,

- a registration software module for performing registration (2) for aligning the received preoperative 3D image data to the intraoperative image data adapted by instructions of the application software module, wherein the registration software module iteratively optimizes the pose of a virtual X-Ray source by repeatedly generating a DRR (Digitally Reconstructed Radiograph) image from the preoperative image data, wherein the contrast inside the region of interest is removed during the DRR generation.

9. A computer program storage device (9) readable by machine, tangibly embodying a program of instructions executable by the machine to perform program steps for registration of at least one preoperative image with at least one intraoperatively acquired image, the program steps comprising:

a) receiving preoperative three-dimensional (3D) image data indicative of a region of interest,

b) receiving intraoperative image data indicative of the region of interest and the presence of at least one part of image dissimilarities between the preoperative image data and the intraoperative image data, the image dissimilarities being caused by the presence of contrast in the preoperative image data and the presence of surgical instruments in the intraoperative image data,

c) segmenting the intraoperative image data by a threshold filter,

d) applying an image interpolation scheme (1) to the segmented voxels of the intraoperative image data in order to remove the surgical instruments from the at least one intraoperatively acquired image,

e) performing registration (2) for aligning the received pre-operative 3D image data to the intraoperative image data adapted in step d), wherein the registration algorithm iteratively optimizes the pose of a virtual X-Ray source by repeatedly generating a DRR (Digitally Reconstructed Radiograph) image from the preoperative image data, wherein the contrast inside the region of interest is removed during the DRR generation.

**Patentansprüche**

1. Verfahren zur Registrierung wenigstens eines präoperativen Bildes auf wenigstens ein während einer Operation aufgenommenes Bild, die folgenden Schritte umfassend:

a) Empfangen von präoperativen dreidimensionalen (3D) Bilddaten, die hinsichtlich eines interessierenden Bereichs indikativ sind,

b) Empfangen von intraoperativen Bilddaten, die hinsichtlich des interessierenden Bereichs und des Vorhandenseins wenigstens eines Teils von Bildunterschieden zwischen den präoperativen Bilddaten und den intraoperativen Bilddaten indikativ sind, wobei die Bildunterschiede durch das Vorhandensein von Kontrast in den präoperativen Bilddaten und das Vorhandensein chirurgischer Instrumente in den intraoperativen Bilddaten verursacht werden,

c) Segmentieren der intraoperativen Bilddaten durch ein Schwellenwertfilter,

d) Anwenden eines Bildinterpolationsschemas (1) auf die segmentierten Voxel der intraoperativen Bilddaten, um die chirurgischen Instrumente aus dem wenigstens einen während einer Operation aufgenommenen Bild zu entfernen,

e) Ausführen einer Registrierung (2) zum Abgleichen der empfangenen präoperativen 3D Bilddaten mit den intraoperativen Bilddaten, die in Schritt d) angepasst wurden, wobei der Registrierungsalgorithmus iterativ die Stellung einer virtuellen Röntgenstrahlenquelle durch wiederholtes Erzeugen eines DRR (Digitally Reconstructed Radiograph, digital rekonstruiertes Röntgenbild) Bildes aus den präoperativen Bilddaten optimiert, wobei der Kontrast innerhalb des interessierenden Bereichs während der DRR-Erzeugung entfernt wird.

2. Verfahren nach Anspruch 1, wobei der Kontrast innerhalb des interessierenden Bereichs entfernt wird durch

- Segmentieren des kontrastierten Teils der präoperativen Bilddaten und Speichern des segmentierten Teils in einem zweiten Volumen,
- während der DRR-Erzeugung, Nachschauen in dem zweiten Volumen vor dem Aktualisieren einer Dämpfung entlang des Strahls, und falls das Nachschauen einen Wert liefert, der größer als null ist, Skalieren des Wertes, der aus den ursprünglich empfangenen präoperativen Bilddaten interpoliert wurde, mit einem vom Benutzer eingestellten Wert.

3. Verfahren nach einem der vorhergehenden Ansprüche, wobei die Schritte d) und e) von Anspruch 1 gleichzeitig ausgeführt werden können.

4. Verfahren nach einem der vorhergehenden Ansprüche, wobei das während einer Operation aufgenommene Bild durch intraoperative dreidimensionale Bilddaten repräsentiert wird.

5. Verfahren nach einem der vorhergehenden Ansprüche 1, 2 oder 4, wobei das während einer Operation aufgenommene Bild durch intraoperative zweidimensionale (2D) Bilddaten repräsentiert wird.

6. Verfahren nach Anspruch 1, wobei in dem Falle, dass die präoperativen Bilddaten wenigstens einen kontrastierten Teil in dem interessierenden Bereich enthalten, der Kontrast innerhalb des interessierenden Bereichs entfernt wird, indem der kontrastierte Teil segmentiert wird und indem der restliche Teil der Bilddaten aus den ursprünglich empfangenen präoperativen Bilddaten interpoliert wird.

7. Verfahren nach einem der vorhergehenden Ansprüche, wobei das Schema in Schritt d) von Anspruch 1 den Schritt des Einbeziehens von Informationen der segmentierten Bilddaten als adaptive Gewichte entweder in die DRR-Erzeugung oder in die Auswertung geeigneter Ähnlichkeitsmaße während der Registrierungsprozedur umfasst.

8. System (10) zur Registrierung wenigstens eines präoperativen Bildes auf wenigstens ein während einer Operation aufgenommenes Bild, umfassend:

   - einen Prozessor,
   - ein Empfänger-Softwaremodul zum Empfangen von präoperativen dreidimensionalen (3D) Bilddaten, die hinsichtlich eines interessierenden Bereichs indikativ sind,
   - ein Empfänger-Softwaremodul zum Empfangen von intraoperativen Bilddaten, die hinsichtlich des interessierenden Bereichs und des Vorhandenseins wenigstens eines Teils von Bildunterschieden zwischen den präoperativen Bilddaten und den intraoperativen Bilddaten indikativ sind, wobei die Bildunterschiede durch das Vorhandensein von Kontrast in den präoperativen Bilddaten und das Vorhandensein chirurgischer Instrumente in den intraoperativen Bilddaten verursacht werden,
   - ein Segmentierungs-Softwaremodul zum Segmentieren der intraoperativen Bilddaten durch ein Schwellenwertfilter,
   - ein Anwendungs-Softwaremodul zum Anwenden eines Bildinterpolationsschemas (1) auf die segmentierten Voxel der intraoperativen Bilddaten, um die chirurgischen Instrumente aus dem wenigstens einen während einer Operation aufgenommenen Bild zu entfernen,
   - ein Registrierungs-Softwaremodul zum Ausführen einer Registrierung (2) zum Abgleichen der empfangenen präoperativen 3D Bilddaten mit den intraoperativen Bilddaten, die durch Anweisungen des Anwendungs-Softwaremoduls angepasst wurden, wobei das Registrierungs-Softwaremodul iterativ die Stellung einer virtuellen Röntgenstrahlenquelle durch wiederholtes Erzeugen eines DRR (Digitally Reconstructed Radiograph, digital rekonstruiertes Röntgenbild) Bildes aus den präoperativen Bilddaten optimiert, wobei der Kontrast innerhalb des interessierenden Bereichs während der DRR-Erzeugung entfernt wird.

9. Maschinenlesbare Computerprogramm-Speichervorrichtung (9), welche ein Programm von maschinenausführbaren Anweisungen zur Ausführung von Programmschritten zur Registrierung wenigstens eines präoperativen Bildes auf wenigstens ein während einer Operation aufgenommenes Bild physisch verkörpert, wobei die Programmschritte umfassen:

   a) Empfangen von präoperativen dreidimensionalen (3D) Bilddaten, die hinsichtlich eines interessierenden Bereichs indikativ sind,
   b) Empfangen von intraoperativen Bilddaten, die hinsichtlich des interessierenden Bereichs und des Vorhandenseins wenigstens eines Teils von Bildunterschieden zwischen den präoperativen Bilddaten und den intraoperativen Bilddaten indikativ sind, wobei die Bildunterschiede durch das Vorhandensein von Kontrast in den präoperativen Bilddaten und das Vorhandensein chirurgischer Instrumente in den intraoperativen Bilddaten verursacht werden,

c) Segmentieren der intraoperativen Bilddaten durch ein Schwellenwertfilter,

d) Anwenden eines Bildinterpolationsschemas (1) auf die segmentierten Voxel der intraoperativen Bilddaten, um die chirurgischen Instrumente aus dem wenigstens einen während einer Operation aufgenommenen Bild zu entfernen,

e) Ausführen einer Registrierung (2) zum Abgleichen der empfangenen präoperativen 3D Bilddaten mit den intraoperativen Bilddaten, die in Schritt d) angepasst wurden, wobei der Registrierungsalgorithmus iterativ die Stellung einer virtuellen Röntgenstrahlenquelle durch wiederholtes Erzeugen eines DRR (Digitally Reconstructed Radiograph, digital rekonstruiertes Röntgenbild) Bildes aus den präoperativen Bilddaten optimiert, wobei der Kontrast innerhalb des interessierenden Bereichs während der DRR-Erzeugung entfernt wird.

## Revendications

1. Un procédé de calage d'au moins une image préopératoire sur au moins une image acquise de manière peropératoire comprenant les étapes suivantes :

   a) la réception de données d'images tridimensionnelles (3D) préopératoires indicatives d'une zone d'intérêt,
   b) la réception de données d'images peropératoires indicatives de la zone d'intérêt et de la présence d'au moins une partie de dissimilarités d'image entre les données d'images préopératoires et les données d'images peropératoires, les dissimilarités d'image étant provoquées par la présence d'un contraste dans les données d'images préopératoires et la présence d'instruments chirurgicaux dans les données d'images peropératoires,
   c) la segmentation des données d'images peropératoires par un filtre de seuil,
   d) l'application d'un mécanisme d'interpolation d'images (1) aux voxels segmentés des données d'images peropératoires afin de supprimer les instruments chirurgicaux de la au moins une image acquise de manière peropératoire,
   e) l'exécution d'un calage (2) de façon à aligner les données d'images 3D préopératoires reçues sur les données d'images peropératoires adaptées à l'étape d), l'algorithme de calage optimisant de manière itérative la pose d'une source de rayons x virtuelle par la génération répétée d'une image DRR (radiographie reconstruite numériquement) à partir des données d'images préopératoires, le contraste à l'intérieur de la zone d'intérêt étant supprimé au cours de la génération d'une DRR.

2. Un procédé selon la revendication 1, dans lequel le contraste à l'intérieur de la zone d'intérêt est supprimé par

   - la segmentation de la partie contrastée des données d'images préopératoires et la conservation en mémoire de la partie segmentée dans un deuxième volume,
   - au cours de la génération d'une DRR, l'exécution d'une consultation du deuxième volume avant l'actualisation d'une atténuation le long du rayon et, si la consultation produit une valeur supérieure à zéro, l'étalonnage de la valeur interpolée à partir des données d'images préopératoires reçues à l'origine avec une valeur définie par l'utilisateur.

3. Un procédé selon l'une quelconque des revendications précédentes, dans lequel les étapes d) et e) selon la revendication 1 peuvent être exécutées simultanément.

4. Un procédé selon l'une quelconque des revendications précédentes, dans lequel ladite image acquise de manière peropératoire est représentée par des données d'images tridimensionnelles peropératoires.

5. Un procédé selon l'une quelconque des revendications précédentes 1, 2 ou 4, dans lequel ladite image acquise de manière peropératoire est représentée par des données d'images bidimensionnelles (2D) peropératoires.

6. Un procédé selon la revendication 1, dans lequel, dans le cas où les données d'images préopératoires contiennent au moins une partie contrastée dans la zone d'intérêt, le contraste à l'intérieur de la zone d'intérêt est supprimé par la segmentation de la partie contrastée et par l'interpolation de la partie restante des données d'images à partir des données d'images préopératoires reçues à l'origine.

7. Un procédé selon l'une quelconque des revendications précédentes, dans lequel ledit mécanisme à l'étape d) selon la revendication 1 comprend l'étape d'introduction d'informations des données d'images segmentées sous la forme de poids adaptatifs soit dans ladite génération d'une DRR ou dans l'évaluation de mesures de similarité adaptées au cours de ladite procédure de calage.

8. Un système (10) de calage d'au moins une image préopératoire sur au moins une image acquise de manière peropératoire comprenant :

- un processeur,
- un module logiciel de réception destiné à la réception de données d'images tridimensionnelles (3D) préopératoires indicatives d'une zone d'intérêt,
- un module logiciel de réception destiné à la réception de données d'images peropératoires indicatives de la zone d'intérêt et de la présence d'au moins une partie de dissimilarités d'image entre les données d'images préopératoires et les données d'images peropératoires, les dissimilarités d'image étant provoquées par la présence d'un contraste dans les données d'images préopératoires et la présence d'instruments chirurgicaux dans les données d'images peropératoires,
- un module logiciel de segmentation destiné à la segmentation des données d'images peropératoires par un filtre de seuil,
- un module logiciel d'application destiné à l'application d'un mécanisme d'interpolation d'images (1) aux voxels segmentés des données d'images peropératoires afin de supprimer les instruments chirurgicaux de la au moins une image acquise de manière peropératoire,
- un module logiciel de calage destiné à l'exécution d'un calage (2) de façon à aligner les données d'images 3D préopératoires reçues sur les données d'images peropératoires adaptées par des instructions du module logiciel d'application, le module logiciel de calage optimisant de manière itérative la pose d'une source de rayons x virtuelle par la génération répétée d'une image DRR (radiographie reconstruite numériquement) à partir des données d'images préopératoires, le contraste à l'intérieur de la zone d'intérêt étant supprimé au cours de la génération d'une DRR.

9. Un dispositif de conservation en mémoire de programme informatique (9) lisible par ordinateur incorporant de manière tangible un programme d'instructions exécutable par l'ordinateur de façon à exécuter des étapes de programme destinées au calage d'au moins une image préopératoire sur au moins une image acquise de manière peropératoire, les étapes de programme comprenant :

a) la réception de données d'images tridimensionnelles (3D) préopératoires indicatives d'une zone d'intérêt,
b) la réception de données d'images peropératoires indicatives de la zone d'intérêt et de la présence d'au moins une partie de dissimilarités d'image entre les données d'images préopératoires et les données d'images peropératoires, les dissimilarités d'image étant provoquées par la présence d'un contraste dans les données d'images préopératoires et la présence d'instruments chirurgicaux dans les données d'images peropératoires,
c) la segmentation des données d'images peropératoires par un filtre de seuil,
d) l'application d'un mécanisme d'interpolation d'images (1) aux voxels segmentés des données d'images peropératoires afin de supprimer les instruments chirurgicaux de la au moins une image acquise de manière peropératoire,
e) l'exécution d'un calage (2) de façon à aligner les données d'images 3D préopératoires reçues sur les données d'images peropératoires adaptées à l'étape d), l'algorithme de calage optimisant de manière itérative la pose d'une source de rayons x virtuelle par la génération répétée d'une image DRR (radiographie reconstruite numériquement) à partir des données d'images préopératoires, le contraste à l'intérieur de la zone d'intérêt étant supprimé au cours de la génération d'une DRR.

FIG 1

(a)

(b)

(c)

(d)

FIG 2

FIG 3

Data Sets

Image
Plane

Eye

—

=

Digitally
Reconstructed
Radiograph (DRR)

EP 2 088 556 B1

EP 2 088 556 B1

FIG 4

Interpolation 1

2D-3D Registration 2

FIG 5

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 2006002615 A1
- US 2006188139 A1
- DE 10122875 C1
- US 20020191735 A1
- US 2006235287 A1

## Non-patent literature cited in the description

- 3D reconstruction of the operating field for image overlay in 3D-endoscopic surgery. **MOURGUES F et al.** PROCEEDINGS IEEE AND ACM INTERNATIONAL SYMPOSIUM ON AUGMENTED REALITY. IEEE COMPUT. SOC LOS ALAMITOS, 2001, 191-192
- **O. KUTTER ; S. KETTNER ; E. U. BRAUN ; N. NAVAB ; R. LANGE ; R. BAUERNSCHMITT.** Towards an integrated planning and navigation system for aortic stent-graft placement. *Proc. of Computer Assisted Radiology and Surgery (CARS),* June 2007
- **J. KR''UGER ; R. WESTERMANN.** Acceleration Techniques for GPU-based Volume Rendering. *Proceedings IEEE Visualization 2003,* 2003
- **A. KHAMENE ; P. BLOCH ; W. WEIN ; M. SVATOS ; F. SAUER.** Automatic registration of portal images and volumetric CT for patient positioning in radiation therapy. *Medical Image Analysis,* February 2006, 96-112
- **L. IBANEZ ; W. SCHROEDER ; L. NG ; J. CATES.** *The itk software guide,* 2005
- **G. P. PENNEY ; J. WEESE ; J. A. LITTLE ; P. DESMEDT ; D. L. G. HILL ; D. J. HAWKES.** A comparison of similarity measures for use in 2-d3-d medical image registration. *IEEE Trans. on Medical Imaging (TMI),* 1998, vol. 17 (4), 586-595
- **P. DIERCKX.** Curve and Surface Fitting with Splines. Oxford University Press, 1995